Europäisches Patentamt

European Patent Office

Office européen des brevets

(11) Numéro de publication: **0 542 644 B1**

(12) **FASCICULE DE BREVET EUROPEEN**

(45) Date de publication du fascicule du brevet: **11.10.95** (51) Int. Cl.6: **C09C 3/04**, C09C 1/02

(21) Numéro de dépôt: **92420402.7**

(22) Date de dépôt: **06.11.92**

(54) **Agent de broyage et/ou de dispersion à base de polymères et/ou copolymères neutralisés en partie par du magnésium pour suspensions aqueuses de matériaux minéraux en vue d'applications pigmentaires.**

(30) Priorité: **12.11.91 FR 9114138**
**12.11.91 FR 9114139**

(43) Date de publication de la demande:
**19.05.93 Bulletin 93/20**

(45) Mention de la délivrance du brevet:
**11.10.95 Bulletin 95/41**

(84) Etats contractants désignés:
**AT BE CH DE DK ES GB GR IE IT LI NL PT SE**

(56) Documents cités:
**EP-A- 0 100 947**
**EP-A- 0 127 388**
**EP-A- 0 185 458**
**EP-A- 0 261 039**
**EP-A- 0 380 430**

(73) Titulaire: **COATEX S.A.**
**35, rue Ampère**
**F-69730 Genay (FR)**

(72) Inventeur: **Egraz, Jean-Bernard**
**Impasse Moulin Carron**
**F-69130 Ecully (FR)**
Inventeur: **Mongoin, Jacques**
**76bis, avenue Lanessan**
**F-69410 Champagne-au-Mont d'Or (FR)**
Inventeur: **Ravet, Georges**
**Route Louis Pradel**
**F-69290 Saint-Genis-les-Ollieres (FR)**

EP 0 542 644 B1

Rank Xerox (UK) Business Services
(3.10/3.09/3.3.3)

# EP 0 542 644 B1

**Description**

La présente invention concerne un agent amélioré de broyage et/ou de dispersion en suspension aqueuse de matériaux minéraux grossiers, permettant d'obtenir une suspension aqueuse de particules minérales affinées, destinée à des applications pigmentaires telle qu'une suspension aqueuse de carbonate de calcium dont la teneur en matière sèche est d'au moins 70% en poids, dont au moins 90% des particules constitutives après broyage ont une dimension inférieure à deux microns, tandis qu'au moins 60% d'entre elles ont une dimension inférieure à un micron.

L'invention concerne également un procédé de broyage en milieu aqueux de matériaux minéraux grossiers, en présence dudit agent de broyage hydrosoluble. Ledit procédé conduit à des suspensions aqueuses de matériaux minéraux dont la viscosité reste stable dans le temps, même si les suspensions ne sont pas maintenues sous agitation, assurant ainsi une grande facilité de manipulation et d'application. Ledit procédé s'applique particulièrement bien au broyage d'une suspension aqueuse de carbonate de calcium, dont la teneur en matière sèche est d'au moins 70% en poids, dont au moins 90% des particules constitutives après broyage ont une dimension inférieure à deux microns, tandis qu'au moins 60% d'entre elles ont une dimension inférieure à un micron. De plus, cette invention concerne les suspensions aqueuses de particules minérales obtenues par ledit procédé ainsi que leurs applications.

Depuis longtemps déjà, il est connu d'utiliser des substances minérales telles que les carbonates de calcium ainsi que le dioxyde de titane pour la préparation de produits industriels destinés, notamment, aux domaines des peintures, de l'enduction du papier, des charges pour caoutchoucs et résines synthétiques, ou autres.

Mais, comme ces substances minérales ne possèdent pas une structure naturelle lamellaire ou feuilletée facilitant leur délitage, comme c'est le cas de certaines substances telles que les silicates d'aluminium habituellement connus sous le nom de kaolin, l'homme de l'art, pour pouvoir les utiliser dans le domaine pigmentaire, doit les transformer par broyage en une suspension aqueuse de grande finesse, dont les grains constitutifs ont une dimension la plus faible possible, c'est-à-dire inférieure à quelques microns.

Par le nombre des publications faites dans ce domaine, la littérature spécialisée révèle l'importance et la complexité du broyage en milieu aqueux de substances minérales pour obtenir une qualité partiellement affinée, autorisant une application pigmentaire. C'est ainsi que, dans le cas particulier de l'enduction des papiers, il est bien connu que la masse d'enduction formée de pigments minéraux tels que les kaolins, le carbonate de calcium ainsi que le dioxyde de titane mis en suspension dans l'eau contient également des agents liants et dispersants, ainsi que d'autres adjuvants tels que des épaississants et des agents de coloration. Or, il est souhaitable qu'une telle suspension dispose d'une viscosité faible et stable pendant la durée de stockage pour en faciliter la manipulation et l'application, de même qu'une teneur en matière minérale la plus élevée possible, afin de diminuer la quantité d'eau manipulée. Une telle suspension idéale, réunissant toutes ces qualités fondamentales, résoudrait pour l'homme de l'art les problèmes bien connus de broyage, de stockage, de transport du lieu de production vers le lieu d'application, enfin de transfert par pompe lors de son utilisation.

Ainsi, jusqu'à présent, l'homme de l'art connait l'utilisation d'agents de broyage et/ou de dispersion aqueuse de particules minérales constitués par des polymères et/ou copolymères acryliques totalement ou partiellement neutralisés par divers agents de neutralisation (brevets FR2539137, FR2531444, FR2603042).

L'homme de l'art connait également l'utilisation d'un agent de broyage et/ou de dispersion constitué par la fraction des polymères et/ou copolymères acryliques alcalins totalement neutralisés par un seul cation, et dont la viscosité spécifique est comprise entre 0,3 et 0,8 (brevet FR2488814), ou partiellement neutralisés par un seul cation tel que le sodium, le potassium, le lithium ou l'ammonium (EP0127388; EP0185458).

Ces divers types d'agents de broyage et/ou de dispersion de l'art antérieur ainsi que d'autres procédés de traitement ou de broyage connus de l'homme de l'art (EP 0278880 ; FR 2642415) permettent d'obtenir des suspensions aqueuses de particules minérales affinées, considérées jusqu'à maintenant comme stables dans le temps, mais pour lesquelles l'utilisateur éprouve certaines difficultés de manipulation car il est amené à stocker ces suspensions plusieurs jours ou semaines sans agitation et se retrouve ainsi confronté au problème d'effet de gel, c'est-à-dire à l'augmentation de la viscosité de la suspension non agitée.

En effet, dans l'art antérieur, la mesure de viscosité de la suspension aqueuse de particules minérales était habituellement effectuée à l'aide d'un viscosimètre Brookfield type RVT à une température de 20°C et à une vitesse de rotation de 100 tours par minute :

(a) à la sortie du broyeur,
(b) après huit jours de repos dans le flacon et après une agitation préalable de la suspension laissée au repos.

2

EP 0 542 644 B1

Ces deux paramètres de mesure n'ont pas permis de mettre en évidence "l'effet de gel" de la suspension aqueuse minérale, néfaste pour l'utilisateur ayant à manipuler des suspensions concentrées stockées depuis plusieurs jours sans agitation, et caractérisées par une viscosité Brookfield avant agitation supérieure à 5000 mPa.s pour une mesure effectuée à 10 tours par minute.

Confrontée à ces inconvénients, la Demanderesse a alors constaté que les suspensions aqueuses minérales obtenues selon l'art antérieur avaient des viscosités Brookfield élevées si la mesure s'effectuait sans agitation préalable de la suspension, ce qui est généralement le cas auquel l'utilisateur de ces suspensions doit faire face.

Forte de cette constatation, la Demanderesse a alors mis au point un agent de broyage et/ou de dispersion ainsi qu'un procédé de broyage en présence dudit agent permettant, de manière surprenante, de réaliser des suspensions minérales aqueuses répondant aux critères de qualité précités.

De manière surprenante, les buts de l'invention sont obtenus lorsque le pourcentage de neutralisation des sites acides actifs du polymère par un agent de neutralisation contenant l'ion magnésium est compris entre 40 et 60%, bornes incluses, tandis que le pourcentage de neutralisation des sites acides actifs du polymère par un agent monovalent est inférieur ou égal à 60%.

Ainsi, un des buts de l'invention est de fournir un agent amélioré de broyage et/ou de dispersion en suspension aqueuse de matériaux minéraux grossiers sans effet de gel.

Un autre but de l'invention est de fournir un procédé de broyage en suspension aqueuse de particules minérales.

Ces suspensions, destinées à des applications pigmentaires, dont au moins 90% des particules ont une dimension inférieure à deux microns et dont au moins 60% d'entre elles ont une dimension inférieure à un micron, selon l'invention, ont une viscosité faible et stable dans le temps, même sans agitation.

Enfin, un autre but de l'invention concerne l'utilisation de ces suspensions aqueuses minérales affinées au domaine de la charge de masse et du couchage du papier, ainsi qu'au domaine des peintures, et des matières polymères après éventuellement élimination de la phase aqueuse.

Ces buts sont atteints grâce à l'utilisation dans le procédé de broyage selon l'invention de l'agent selon l'invention, qui résulte de la polymérisation et/ou de la copolymérisation de monomères acryliques et/ou vinyliques comportant des groupes acides (carboxyliques, sulfoniques, phosphoniques, phosphoriques ou autres), et dont les sites acides actifs sont totalement ou partiellement neutralisés avec un taux de neutralisation des sites acides actifs par un agent de neutralisation contenant l'ion magnésium allant de 40% à 60%, bornes incluses, et par un agent de neutralisation disposant d'un ion monovalent, pouvant neutraliser jusqu'à 60% des sites acides actifs du polymère et/ou copolymère.

L'agent de broyage et/ou de dispersion selon l'invention est constitué, comme cela a été exprimé, par les polymères et/ou copolymères acryliques acides partiellement ou totalement neutralisés. Ces polymères et/ou copolymères acryliques sont obtenus selon des procédés connus de la polymérisation radicalaire, en présence de régulateurs de polymérisation tels que par exemple des composés organiques à base d'hydroxylamine et en présence d'initiateurs de polymérisation tels que les peroxydes et les persels, par exemple l'eau oxygénée, le persulfate, l'hypophosphite de sodium, l'acide hypophosphoreux, de l'un au moins des monomères et/ou comonomères suivants : acide acrylique et/ou méthacrylique, itaconique, crotonique, fumarique, anhydride maléique, ou encore isocrotonique, aconitique, mésaconique, sinapique, undécylénique, angélique, canellique, hydroxyacrylique, sous forme acide ou partiellement neutralisée, l'acroléine, l'acrylamide, l'acrylonitrile, les esters des acides acrylique et méthacrylique, et en particulier le méthacrylate de diméthylaminoéthyle, vinylpyrrolidone, vinylcaprolactame, l'éthylène, le propylène, l'isobutylène, le diisobutylène, l'acétate de vinyle, le styrène, l'alphaméthylstyrène, la méthylvinylcétone, dans un milieu de polymérisation qui peut être l'eau, le méthanol, l'éthanol, le propanol, l'isopropanol, les butanols, ou leurs mélanges, ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, le xylène, le mercaptoéthanol, le tertiododécylmercaptan, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, les éthers de monopropylèneglycol, diéthylèneglycol ou leur mélange.

Le polymérisat acide obtenu est éventuellement distillé puis partiellement ou totalement neutralisé par au moins un agent de neutralisation contenant l'ion magnésium, de telle sorte que le pourcentage de neutralisation des sites acides actifs par l'ion magnésium varie entre 40% et 60%, bornes incluses, et par un agent de neutralisation disposant d'un ion monovalent pouvant neutraliser jusqu'à 60% des sites acides actifs dudit agent.

L'agent de neutralisation monovalent est choisi dans le groupe constitué par les cations alcalins (en particulier le sodium, le lithium), l'ammonium, les amines primaires, secondaires ou tertiaires aliphatiques

3

et/ou cycliques telles que, par exemple, les éthanolamines (mono, di, triéthanolamine), la mono et diéthylamine, la cyclohexylamine, la méthylcyclohexylamine.

Les polymères et/ou copolymères selon l'invention ont généralement une viscosité spécifique au plus égale à 25, et de préférence au plus égale à 10.

Cette viscosité spécifique des polymères et/ou copolymères est symbolisée par la lettre "$\eta$" et est déterminée de la manière suivante.

On prend une solution du polymérisat de façon à obtenir une solution correspondant à 2,5 g de polymère sec et à 50 ml d'une solution de chlorure de sodium à 60 g/l.

Puis, on mesure avec un viscosimètre capillaire de constante de Baume égale à 0,000105 placé dans un bain thermostaté à 25°C le temps d'écoulement d'un volume donné de la solution précitée contenant le polymère et/ou copolymère alcalin, ainsi que le temps d'écoulement du même volume de solution aqueuse de chlorure de sodium dépourvue dudit polymère et/ou copolymère. Il est alors possible de définir la viscosité "$\eta$" grâce à la relation suivante :

$$\eta = \frac{\text{(temps d'écoulement de la solution de polymère)} - \text{(temps d'écoulement de la solution NaCl)}}{\text{temps d'écoulement de la solution NaCl}}$$

Le tube capillaire est généralement choisi de telle manière que le temps d'écoulement de la solution de NaCl, dépourvue de polymère et/ou copolymère, soit d'environ 90 à 100 secondes, donnant ainsi des mesures de viscosité spécifique d'une très bonne précision. Les polymères et/ou copolymères selon l'invention peuvent également être traités par tous moyens connus pour les isoler sous la forme d'une fine poudre, qui peut être utilisée sous cette autre forme comme agent de broyage.

En pratique, l'opération de broyage de la substance minérale à affiner consiste à broyer la substance minérale avec un corps broyant en particules très fines dans un milieu aqueux contenant l'agent de broyage. On forme une suspension aqueuse de la substance minérale à broyer, dont les grains ont une dimension initiale au plus égale à 50 microns, en une quantité telle que la concentration en matière sèche de ladite suspension est d'au moins 70% en poids.

A la suspension de la substance minérale à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR2303681 qui décrit des éléments broyants formés de 30 à 70% en poids d'oxyde de zirconium, 0,1 à 5% d'oxyde d'aluminium et de 5 à 20% d'oxyde de silicium. Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à microéléments.

L'agent de broyage et/ou de dispersion selon l'invention est également introduit au sein du mélange formé par la suspension aqueuse de substances minérales et par le corps broyant à raison de 0,2 à 2% en poids de la fraction séchée desdits polymères par rapport à la masse sèche de la substance minérale à affiner.

Le temps nécessaire pour aboutir à une excellente finesse de la substance minérale après broyage varie selon la nature et la quantité des substances minérales à porphyriser, et selon le mode d'agitation utilisé et la température du milieu pendant l'opération de broyage.

Les substances minérales à affiner peuvent être d'origines très diverses telles que le carbonate de calcium et les dolomies, le sulfate de calcium, le kaolin, le dioxyde de titane, c'est-à-dire toutes les substances minérales qui doivent être broyées pour être utilisables dans des applications aussi diversifiées que l'enduction des papiers, la pigmentation des peintures et enduits, la charge des caoutchoucs ou résines synthétiques, la matification des textiles synthétiques, ou autres.

Ainsi, l'application de l'agent de broyage et/ou de dispersion selon l'invention autorise la transformation par broyage en suspension aqueuse de haute concentration en matière sèche de substances minérales

4

grossières en des particules très fines, dont 90% au moins d'entre elles ont une dimension toujours inférieure à deux microns, et dont 60% au moins d'entre elles ont une dimension inférieure à un micron, et d'obtenir une suspension de substances minérales très fines dont la viscosité est faible et stable dans le temps et sans effet de gel.

La portée et l'intérêt de l'invention seront mieux perçus grâce aux exemples suivants.

**Exemple 1**

Cet exemple concerne la préparation d'une suspension de carbonate de calcium grossier soumise à un broyage pour l'affiner en une suspension microparticulaire. Dans ce but, une suspension de carbonate de calcium grossier a été préparée à partir d'un carbonate de calcium naturel de diamètre moyen 50 micromètres, en mettant en oeuvre :

- pour l'essai n°1 illustrant l'art antérieur, un acide polyacrylique de viscosité spécifique 0,54 correspondant à un poids moléculaire d'environ 4 000, obtenu par polymérisation radicalaire et totalement neutralisé par de l'hydroxyde de sodium,
- pour l'essai n°2 illustrant également l'art antérieur, le même acide polyacrylique (de viscosité spécifique 0,54) que celui de l'essai précédent, totalement neutralisé par de la soude et de la chaux dans un rapport correspondant à une neutralisation des sites acides actifs à raison de 70% par le sodium - 30% par le calcium,
- pour l'essai n°3 illustrant toujours l'art antérieur, le même acide polyacrylique (de viscosité spécifique 0,54) que celui des essais précédents, partiellement neutralisé par l'hydroxyde de sodium au taux de 66% des sites acides actifs,
- pour l'essai n°4 illustrant l'invention, le même acide polyacrylique (de viscosité spécifique 0,54) que les précédents, totalement neutralisé par de la soude et de la magnésie, dans un rapport correspondant à une neutralisation des sites acides actifs à raison de 50% par le sodium - 50% par le magnésium.

Pour chaque essai, on a préparé une suspension aqueuse de carbonate de calcium provenant du gisement d'Orgon (France), ayant une granulométrie inférieure à 10 microns.

La suspension aqueuse a une concentration en matière sèche de 76% en poids par rapport à la masse totale.

L'agent de broyage est introduit dans cette suspension selon les quantités indiquées dans le tableau ci-après, exprimées en pour cent en poids sec par rapport à la masse de carbonate de calcium sec à broyer.

La suspension circule dans un broyeur du type Dyno-Mill à cylindre fixe et impulseur tournant, dont le corps broyant est constitué par des billes de corindon de diamètre compris dans l'intervalle 0, 6 millimètre à 1,0 millimètre.

Le volume total occupé par le corps broyant est de 1 150 centimètres cubes tandis que sa masse est de 2 900 g.

La chambre de broyage a un volume de 1 400 centimètres cubes.

La vitesse circonférentielle du broyeur est de 10 mètres par seconde.

La suspension de carbonate de calcium est recyclée à raison de 18 litres par heure.

La sortie du broyeur Dyno-Mill est munie d'un séparateur de mailles 200 microns permettant de séparer la suspension résultant du broyage et le corps broyant.

La température lors de chaque essai de broyage est maintenue à 60°C environ.

A la fin du broyage (To), on récupère dans un flacon un échantillon de la suspension pigmentaire dont 80% des particules ont une dimension inférieure à un micron, et on en mesure la viscosité à l'aide d'un viscosimètre Brookfield type RVT, à une température de 20°C et une vitesse de rotation de 10 tours par minute avec le mobile adéquat.

Après un temps de repos de 8 jours dans le flacon, la viscosité de la suspension est mesurée par introduction dans le flacon non agité du mobile adéquat du viscosimètre Brookfield type RVT, à une température de 20°C et une vitesse de rotation de 10 tours par minute (viscosité AVAG = avant agitation).

Tous les résultats expérimentaux sont consignés dans le tableau 1.

## TABLEAU 1

| | Essai No. | AGENT DE BROYAGE UTILISE | | | | Viscosité Brookfield de la suspension (à 20°C en mPa.s) | |
|---|---|---|---|---|---|---|---|
| | | NEUTRALISATION | | Viscosité spécifique | Consommation en agent en % sec/sec | To 10 T/mn | 8 jours AVAG 10 T/mn |
| | | Taux de groupes acides neutralisés | Cation neutralisant | | | | |
| Art antérieur | 1 | 100 | Na | 0,54 | 1,04 | 1400 | 17000 |
| | 2 | 70/30 | Na/Ca | 0,54 | 1,09 | 1150 | 5160 |
| | 3 | 66 | Na | 0,54 | 1,13 | 1480 | 5050 |
| Invention | 4 | 50/50 | Na/Mg | 0,54 | 1,13 | 1500 | 3400 |

AVAG : Mesure de la viscosité avant agitation de la suspension

La lecture du tableau 1 permet de constater que seule la suspension de carbonate de calcium broyée par l'agent selon l'invention (essai n° 4) a une viscosité Brookfield mesurée à 10 tours par minute après 8 jours au repos, et sans agitation préalable, nettement inférieure à 5000 mPa.s, alors que tous les essais des exemples effectués selon un procédé de l'art antérieur donnent des viscosités supérieures à 5000 mPa.s.

Ainsi, le procédé de broyage selon l'invention permet d'obtenir la stabilité de la viscosité des suspensions de carbonate de calcium avant même toute agitation.

## Exemple 2

Un deuxième groupe d'essais (essais n°5 à n°13) concerne la préparation et le broyage de la suspension aqueuse du même carbonate de calcium, à la même concentration de matière sèche, en présence du même acide polyacrylique de viscosité spécifique 0,54 neutralisé par des taux variables de magnésium.

Ces essais ont été exécutés selon les mêmes critères expérimentaux que ceux de l'exemple 1.

Tous les résultats expérimentaux sont consignés dans le tableau 2.

## TABLEAU 2

| Essai No. | AGENT DE BROYAGE UTILISE | | | | Viscosité Brookfield de la suspension (à 20°C en mPa.s) | |
|---|---|---|---|---|---|---|
| | NEUTRALISATION | | Viscosité spécifique | Consommation en agent en % sec/sec | To 10 T/mn | 8 jours AVAG 10 T/mn |
| | Taux de groupes acides neutralisés | Cation neutralisant | | | | |
| 5 | 70/30 | Na/Mg | 0,54 | 1,05 | 1570 | 5750 |
| 6 | 60/40 | Na/Mg | 0,54 | 1,03 | 1120 | 4076 |
| 7 | 55/45 | Na/Mg | 0,54 | 1,02 | 1250 | 3600 |
| 8 | 50/50 | Na/Mg | 0,54 | 1,13 | 1500 | 3400 |
| 9 (Invention) | 45/55 | Na/Mg | 0,54 | 1,12 | 1480 | 3320 |
| 10 | 40/60 | Na/Mg | 0,54 | 1,16 | 1390 | 1635 |
| 11 | 30/70 | Na/Mg | 0,54 | 1,29 | 1160 | 1730 |
| 12 | 20/80 | Na/Mg | 0,54 | 1,32 | 2000 | 2530 |
| 13 (Invention) | 40/50 | Na/Mg | 0,54 | 1,17 | 1250 | 1800 |

AVAG : Mesure de la viscosité avant agitation de la suspension

La lecture du tableau 2 permet de constater les résultats rhéologiques de l'invention, ainsi que de constater que l'utilisation de l'agent selon l'invention permet de franchir un seuil de rentabilité lors d'essais pratiques.

En effet, deux critères sont pris en compte par l'utilisateur, l'aspect économique et l'aspect rhéologique. Un surdosage de l'agent de broyage et/ou de dispersion entraîne un surcoût dans la production de suspension affinée de carbonate de calcium.

Ainsi, la consommation d'agent de broyage et/ou de dispersion dans l'opération de broyage ne doit pas dépasser 1,2% d'agent dispersant sec par rapport au poids de carbonate de calcium sec pour l'obtention d'une suspension dont 80% des particules sont inférieures à 1 micron et de concentration en matière sèche de 76%. Les essais n°6 à n°10 délimitent alors les bornes de l'invention, ainsi que l'essai n°13.

Quant à l'aspect rhéologique, l'utilisateur ayant à manipuler des suspensions concentrées stockées depuis plusieurs jours sans agitation admet qu'une viscosité Brookfield inférieure à 5000 mPa.s, mesurée à 10T/minute avant agitation, est acceptable.

Ces deux critères économique et rhéologique font que les suspensions de carbonate de calcium satisfaisant à ces conditions sont celles des essais n°6 à n°10 et n°13, c'est-à-dire celles obtenues par l'utilisation comme agent de broyage d'un acide polyacrylique totalement ou partiellement neutralisé par au moins un agent de neutralisation contenant l'ion magnésium, de telle sorte que 40% à 60% des sites acides actifs sont neutralisés par un agent de neutralisation contenant l'ion magnésium et jusqu'à 60% des sites acides actifs sont neutralisés par un agent de neutralisation disposant d'un ion monovalent.

## Exemple 3

Cet exemple (essais n°14 - 16) concerne la préparation et le broyage de la suspension aqueuse du même carbonate de calcium à la même concentration de matière sèche, en présence du même acide polyacrylique de viscosité spécifique 0,54 neutralisé par différents agents de neutralisation contenant des ions polyvalents autres que le magnésium.

Ainsi, le broyage de l'essai n°14 est effectué en utilisant l'acide polyacrylique précité et neutralisé par de la soude et de la chaux dans un rapport correspondant à une neutralisation des sites acides actifs à raison de 55% par le sodium - 45% par le calcium, tandis que l'essai n°15 concerne ce même acide polyacrylique neutralisé par de la soude et de l'hydroxyde de zinc dans un rapport correspondant au maximum de solubilité de l'hydroxyde de zinc, soit un rapport correspondant à une neutralisation des sites acides actifs à raison de 83% par le sodium - 17% par le zinc.

De même, l'essai n°16 correspond à l'agent de broyage obtenu par neutralisation par de la soude et de l'hydroxyde d'aluminium dans un rapport correspondant au maximum de solubilité de l'hydroxyde d'aluminium, soit un rapport correspondant à une neutralisation des sites acides actifs à raison de 90% par le sodium - 10% par l'aluminium.

Ces essais ont été exécutés selon les mêmes critères expérimentaux que ceux de l'exemple 1.

Tous les résultats sont consignés dans le tableau 3.

## TABLEAU 3

| Essai No. | AGENT DE BROYAGE UTILISE | | | | Viscosité Brookfield de la suspension (à 20°C en mPa.s) | |
|---|---|---|---|---|---|---|
| | NEUTRALISATION | | Viscosité spécifique | Consommation en agent en % sec/sec | To 10 T/mn | 8 jours AVAG 10 T/mn |
| | Taux de groupes acides neutralisés | Cation neutralisant | | | | |
| 14 | 55/45 | Na/Ca | 0,54 | 1,38 | 1350 | 5700 |
| 15 | 83/17 | Na/Zn | 0,54 | 1,16 | 1400 | 6200 |
| 16 | 90/10 | Na/Al | 0,54 | 1,08 | 1550 | 11000 |
| 7 | 55/45 | Na/Mg | 0,54 | 1,02 | 1250 | 3600 |

AVAG : Mesure de la viscosité avant agitation de la suspension

La lecture du tableau 3 permet de constater que l'utilisation d'autres agents de neutralisation tels que le calcium (essai n° 14), le zinc (essai n° 15), l'aluminium (essai n° 16) aboutit à des suspensions de carbonate de calcium dont la viscosité Brookfield mesurée à 10 tours par minute après 8 jours de repos, et sans agitation préalable, est supérieure à 5000 mPa.s, alors que l'usage d'un agent neutralisant tel que le magnésium conduit à une suspension de viscosité nettement inférieure à 5000 mPa.s (essai n° 7).

Ainsi, la lecture du tableau 3 permet de constater que l'utilisation d'autres agents de neutralisation polyvalents autres que le magnésium ne permet pas d'obtenir des suspensions stables sans effet de gel.

## Exemple 4

Cet exemple (essais n° 17 - 19) concerne la préparation et le broyage de la suspension aqueuse du même carbonate de calcium à la même concentration de matière sèche, en présence du même acide polyacrylique de viscosité spécifique 0,54 neutralisé à 50% par l'ion magnésium et à 50% par différents agents de neutralisation contenant un cation monovalent.

Ces différents agents de neutralisation contenant un cation monovalent sont l'ammonium pour l'essai n° 17, le lithium pour l'essai n° 18, le potassium pour l'essai n° 19.

Ces essais ont été exécutés selon les mêmes critères expérimentaux que ceux de l'exemple 1.

Tous les résultats sont consignés dans le tableau 4.

## TABLEAU 4

| Essai No. | AGENT DE BROYAGE UTILISE | | | | Viscosité Brookfield de la suspension (à 20°C en mPa.s) | |
|---|---|---|---|---|---|---|
| | NEUTRALISATION | | Viscosité spécifique | Consommation en agent en % sec/sec | To 10 T/mn | 8 jours AVAG 10 T/mn |
| | Taux de groupes acides neutralisés | Cation neutralisant | | | | |
| 17 | 50/50 | NH$_4$/Mg | 0,54 | 0,92 | 1040 | 4780 |
| 18 | 50/50 | Li/Mg | 0,54 | 1,17 | 2850 | 3600 |
| 19 | 50/50 | K/Mg | 0,54 | 1,08 | 1300 | 5475 |

AVAG : Mesure de la viscosité avant agitation de la suspension

La lecture du tableau 4 permet de constater que l'ion sodium peut être efficacement remplacé par des agents de neutralisation monovalents tel que l'ion ammonium ou l'ion lithium.

**Revendications**

1. Agent de broyage et/ou de dispersion en suspension aqueuse de matériaux minéraux grossiers destinés à des applications pigmentaires, constitué par les polymères et/ou copolymères acryliques et/ou vinyliques comportant des groupes acides partiellement ou totalement neutralisés résultant de la polymérisation et/ou copolymérisation de monomères acryliques et/ou vinyliques, caractérisé en ce que les sites acides actifs dudit agent sont totalement ou partiellement neutralisés par au moins un agent de neutralisation contenant l'ion magnésium, de telle sorte que le pourcentage de neutralisation des sites acides actifs par l'ion magnésium varie entre 40 et 60%, bornes incluses, et par un agent de neutralisation disposant d'un ion monovalent pouvant neutraliser jusqu'à 60% des sites acides actifs dudit agent.

2. Agent de broyage et/ou de dispersion en suspension aqueuse de matériaux minéraux grossiers selon la revendication 1, caractérisé en ce que les sites acides actifs dudit agent sont totalement neutralisés par au moins un agent de neutralisation contenant l'ion magnésium, de telle sorte que le pourcentage de neutralisation des sites acides actifs par l'ion magnésium varie entre 40% et 60%, bornes incluses, et par un agent de neutralisation contenant un ion monovalent neutralisant les 60% à 40% des sites acides actifs restants.

3. Agent de broyage et/ou de dispersion en suspension aqueuse de matériaux minéraux grossiers selon la revendication 1, caractérisé en ce que les sites acides actifs dudit agent sont partiellement neutralisés par au moins un agent de neutralisation contenant l'ion magnésium, de telle sorte que le pourcentage de neutralisation des sites acides actifs par l'ion magnésium varie entre 40% et 60%, bornes incluses, et par un agent de neutralisation contenant un ion monovalent pouvant neutraliser jusqu'à 60% des sites acides actifs.

4. Agent de broyage et/ou de dispersion en suspension aqueuse de matériaux minéraux grossiers selon l'une quelconque des revendications 1 à 3, caractérisé en ce que l'ion monovalent de l'agent de neutralisation est choisi parmi l'ion sodium, l'ion lithium, l'ammonium et les amines primaires, secondaires ou tertiaires aliphatiques et/ou cycliques.

5. Agent de broyage et/ou de dispersion en suspension aqueuse de matériaux minéraux grossiers selon l'une quelconque des revendications 1 à 4, caractérisé en ce que ledit agent a une viscosité spécifique au plus égale à 25, et de préférence au plus égale à 10.

6. Agent de broyage et/ou de dispersion en suspension aqueuse de matériaux minéraux grossiers selon la revendication 5, caractérisé en ce qu'il est une solution.

7. Agent de broyage et/ou de dispersion en suspension aqueuse de matériaux minéraux grossiers selon la revendication 5, caractérisé en ce qu'il est une poudre.

8. Procédé de broyage en suspension aqueuse de matériaux minéraux grossiers destinés à des applications pigmentaires consistant à préparer une suspension aqueuse de ces matériaux, à introduire un agent de broyage constitué des polymères et/ou copolymères acryliques et/ou vinyliques comportant des groupes acides partiellement ou totalement neutralisés résultant de la polymérisation et/ou copolymérisation de monomères acryliques et/ou vinyliques, à ajouter à la suspension un corps broyant et à soumettre le mélange ainsi réalisé à une action de broyage, caractérisé en ce que ledit agent de broyage est tel que décrit dans l'une quelconque des revendications 1 à 7.

9. Procédé de broyage en suspension aqueuse de matériaux minéraux grossiers selon la revendication 8, caractérisé en ce que l'agent de broyage est introduit au sein de la suspension à raison de 0,2% à 2% en poids sec dudit polymère par rapport au poids sec de la substance minérale à broyer.

10. Procédé de broyage en suspension aqueuse de matériaux minéraux grossiers selon l'une quelconque des revendications 8 ou 9, caractérisé en ce que la suspension aqueuse de matériaux minéraux à broyer comporte au moins 70% en poids de matières sèches.

EP 0 542 644 B1

**11.** Suspension aqueuse de matériaux minéraux affinés à l'aide du procédé de broyage selon l'une quelconque des revendications 8 à 10, caractérisée en ce que au moins 90% des particules de la substance broyée ont une dimension inférieure à deux microns.

**12.** Suspension aqueuse de matériaux minéraux affinés selon la revendication 11, caractérisée en ce que la viscosité Brookfield de ladite suspension mesurée sans agitation après au moins 8 jours de stockage à 10 tours par minute ne dépasse pas 5000 mPa.s.

**13.** Application de la suspension aqueuse de matériaux minéraux affinés selon les revendications 11 et 12 au domaine de la charge de masse, du couchage du papier, de la peinture et du plastique.

**Claims**

**1.** Agent for crushing and/or dispersion in aqueous suspension of coarse mineral materials destined for pigmentary applications, constituted by acrylic and/or vinylic polymers and/or copolymers which include partially or totally neutralised acid groups resulting from the polymerisation and/or copolymerisation of acrylic and/or vinylic monomers, characterised by the fact that the active acid sites of the said agent are totally or partially neutralised by at least one neutralising agent containing the magnesium ion, in such a manner that the percentage of neutralisation of the active acid sites by the magnesium ion varies between 40 and 60%, end sites included, and by a neutralising agent having a monovalent ion able to neutralise up to 60% of the active acid sites of the said agent.

**2.** Agent for crushing and/or dispersion in aqueous suspension of coarse mineral materials according to claim 1, characterised by the fact that the active acid sites of the said agent are totally neutralised by at least one neutralising agent containing the magnesium ion, in such a manner that the percentage of neutralisation of the active acid sites by the magnesium ion varies between 40 and 60%, end sites included, and by a neutralising agent having a monovalent ion neutralising the 60% to 40% of remaining active acid sites.

**3.** Agent for crushing and/or dispersion in aqueous suspension of coarse mineral materials according to claim 1, characterised by the fact that the active acid sites of the said agent are partially neutralised by at least one neutralising agent containing the magnesium ion, in such a manner that the percentage of neutralisation of the active acid sites by the magnesium ion varies between 40 and 60%, end sites included, and by a neutralising agent having a monovalent ion able to neutralise up to 60% of the active acid sites.

**4.** Agent for crushing and/or dispersion in aqueous suspension of coarse mineral materials according to any of claims 1 to 3, characterised by the fact that the monovalent ion of the neutralising agent is chosen from among the sodium ion, the lithium ion, ammonium and the aliphatic and/or cyclic primary, secondary or tertiary amines.

**5.** Agent for crushing and/or dispersion in aqueous suspension of coarse mineral materials according to any of claims 1 to 4, characterised by the fact that the said agent has a specific viscosity of no more than 25 and preferably no more than 10.

**6.** Agent for crushing and/or dispersion in aqueous suspension of coarse mineral materials according to claim 5, characterised by the fact that it is a solution.

**7.** Agent for crushing and/or dispersion in aqueous suspension of coarse mineral materials according to claim 5, characterised by the fact that it is a powder.

**8.** Process for crushing in aqueous suspension of coarse mineral materials destined for pigmentary applications consisting of preparing an aqueous suspension of these materials, introducing a crushing agent composed of acrylic and/or vinylic polymers and/or copolymers which include partially or totally neutralised acid groups resulting from the polymerisation and/or copolymerisation of acrylic and/or vinylic monomers, adding to the suspension a crushing body and subjecting the mixture thus produced to a crushing action, characterised by the fact that the said crushing agent is such as described in any of claims 1 to 7.

14

9. Process for crushing in aqueous suspension of coarse mineral materials according to claim 8, characterised by the fact that the crushing agent is introduced into the suspension at the rate of 0.2% to 2% by dry weight of the said polymer in relation to the dry weight of the mineral substance to be crushed.

10. Process for crushing in aqueous suspension of coarse mineral materials according to either of claims 8 or 9, characterised by the fact that the aqueous suspension of the mineral materials to be crushed includes at least 70% by weight of dry matter.

11. Aqueous suspension of mineral materials refined by means of the crushing process according to any of claims 8 to 10, characterised by the fact that at least 90% of the particles of the crushed substance have a size of less than two microns.

12. Aqueous suspension of mineral materials refined according to claim 11, characterised by the fact that the Brookfield viscosity of the said suspension measured without agitation after at least 8 days of storage at 10 revolutions per minute does not exceed 5000 mPa.s.

13. Application of the aqueous suspension of materials refined according to claims 11 and 12 to the field of mass loading, paper coating, paints and plastics.

**Patentansprüche**

1. Mittel zum Mahlen und/oder Dispergieren in wäßriger Suspension von groben mineralischen Materialien, die für Pigment-Anwendungen bestimmt sind, zusammengesetzt aus acrylischen und/oder vinylischen Polymeren und/oder Copolymeren, die teilweise oder vollständig neutralisierte saure Gruppen umfassen, welche das Ergebnis der Polymerisation und/oder Copolymerisation von acrylischen und/oder vinylischen Monomeren sind, dadurch gekennzeichnet, daß die aktiven sauren Stellen des Mittels ganz oder teilweise neutralisiert sind durch mindestens ein Neutralisationsmittel, das das Magnesiumion enthält, derart, daß der Prozentsatz der Neutralisation der aktiven sauren Stellen durch das Magnesiumion zwischen 40 und 60%, Grenzen eingeschlossen, variiert, und durch ein Neutralisationsmittel, das über ein einwertiges Ion verfügt, welches bis zu 60% der aktiven sauren Stellen des Mittels neutralisieren kann.

2. Mittel zum Mahlen und/oder Dispergieren in wäßriger Suspension von groben mineralischen Materialien nach Anspruch 1, dadurch gekennzeichnet, daß die aktiven sauren Stellen des Mittels vollständig neutralisiert sind durch mindestens ein Neutralisationsmittel, das das Magnesiumion enthält, derart, daß der Prozentsatz der Neutralisation der aktiven sauren Stellen durch das Magnesiumion zwischen 40% und 60%, Grenzen eingeschlossen, variiert, und durch ein Neutralisationsmittel, das ein einwertiges Ion enthält, welches 60% bis 40% der verbleibenden aktiven sauren Stellen neutralisiert.

3. Mittel zum Mahlen und/oder Dispergieren in wäßriger Suspension von groben mineralischen Materialien nach Anspruch 1, dadurch gekennzeichnet, daß die aktiven sauren Stellen des Mittels teilweise neutralisiert sind durch mindestens ein Neutralisationsmittel, das das Magnesiumion enthält, derart, daß der Prozentsatz der Neutralisation der aktiven sauren Stellen durch das Magnesiumion zwischen 40% und 60%, Grenzen eingeschlossen, variiert, und durch ein Neutralisationsmittel, das ein einwertiges Ion enthält, welches bis zu 60% der aktiven sauren Stellen neutralisieren kann.

4. Mittel zum Mahlen und/oder Dispergieren in wäßriger Suspension von groben mineralischen Materialien nach irgendeinem der Ansprüche 1 bis 3, dadurch gekennzeichnet, daß das einwertige Ion des Neutralisationsmittels ausgewählt ist aus dem Natriumion, dem Lithiumion, Ammonium und den primären, sekundären oder tertiären aliphatischen und/oder cyclischen Aminen.

5. Mittel zum Mahlen und/oder Dispergieren in wäßriger Suspension von groben mineralischen Materialien nach irgendeinem der Ansprüche 1 bis 4, dadurch gekennzeichnet, daß das Mittel eine spezifische Viskosität höchstens gleich 25 und vorzugsweise höchstens gleich 10 aufweist.

6. Mittel zum Mahlen und/oder Dispergieren in wäßriger Suspension von groben mineralischen Materialien nach Anspruch 5, dadurch gekennzeichnet, daß es als Lösung vorliegt.

7.  Mittel zum Mahlen und/oder Dispergieren in wäßriger Suspension von groben mineralischen Materialien nach Anspruch 5, dadurch gekennzeichnet, daß es als Pulver vorliegt.

8.  Verfahren zum Mahlen in wäßriger Suspension von groben mineralischen Materialien, die für Pigment-Anwendungen bestimmt sind, darin bestehend, eine wäßrige Suspension dieser Materialien herzustellen, ein Mittel zum Mahlen einzuführen, das aus acrylischen und/oder vinylischen Polymeren und/oder Copolymeren zusammengesetzt ist, die teilweise oder vollständig neutralisierte saure Gruppen umfassen, welche das Ergebnis der Polymerisation und/oder Copolymerisation von acrylischen und/oder vinylischen Monomeren sind, der Suspension einen Mahlkörper zuzusetzen und die so hergestellte Mischung einem Mahlvorgang zu unterziehen, dadurch gekennzeichnet, daß das Mittel zum Mahlen das in irgendeinem der Ansprüche 1 bis 7 beschriebene ist.

9.  Verfahren zum Mahlen in wäßriger Suspension von groben mineralischen Materialien nach Anspruch 8, dadurch gekennzeichnet, daß das Mittel zum Mahlen in einem Verhältnis von 0,2 bis 2 Trockengew.-% des Polymers, bezogen auf das Trockengewicht der zu mahlenden mineralischen Substanz, eingeführt wird.

10.  Verfahren zum Mahlen in wäßriger Suspension von groben mineralischen Materialien nach irgendeinem der Ansprüche 8 oder 9, dadurch gekennzeichnet, daß die wäßrige Suspension der zu mahlenden mineralischen Materialien mindestens 70 Gew.-% an Trockensubstanzen umfaßt.

11.  Wäßrige Suspension von mineralischen Materialien, die mit Hilfe des Verfahrens zum Mahlen nach irgendeinem der Amsprüche 8 bis 10 verfeinert worden sind, dadurch gekennzeichnet, daß mindestens 90% der Teilchen der gemahlenen Substanz eine Abmessung unterhalb von 2 $\mu$m aufweisen.

12.  Wäßrige Suspension von verfeinerten mineralischen Materialien nach Anspruch 11, dadurch gekennzeichnet, daß die Brookfield-Viskosität der Suspension, gemessen ohne Rühren nach mindestens 8 Tagen Aufbewahrung bei 10 Umdrehungen pro Minute, 5000 mPa.s nicht überschreitet.

13.  Verwendung der wäßrigen Suspension von verfeinerten mineralischen Materialien nach Anspruch 11 und 12 im Füllstoff-, Papierbeschichtungs-, Anstrich- und Kunststoffbereich.